**Europäisches Patentamt**

**European Patent Office**

**Office européen des brevets**

(19)

(11) Publication number : **0 513 934 A1**

# (12) EUROPEAN PATENT APPLICATION

(21) Application number : **92201650.6**

(22) Date of filing : **05.06.92**

(51) Int. Cl.⁵ : $A01G\ 9/14$, $E04D\ 3/08$

(30) Priority : **07.06.91 BE 9100554**
**06.12.91 BE 9101118**
**03.09.91 BE 9100818**
**18.02.92 BE 9200167**

(43) Date of publication of application :
**19.11.92 Bulletin 92/47**

(84) Designated Contracting States :
**BE DE DK FR GB NL SE**

(71) Applicant : **P.L.J. BOM BEHEER B.V.**
**Slachthuisstraat 7**
**NL-2671 CT Naaldwijk (NL)**

(72) Inventor : **Bom, Petrus Leonardus Josef**
**De Barch 7**
**NL-3155 BB Maasland (NL)**

(74) Representative : **Konings, Lucien Marie**
**Cornelis Joseph**
**OCTROOIBUREAU ARNOLD & SIEDSMA**
**Sweelinckplein 1**
**NL-2517 GK Den Haag (NL)**

(54) **Glasshouse.**

(57)    According to the invention the glasshouse has the characteristic that at least one bar comprises a bar profile of steel (13) and a glass receiving profile of plastic (14) fixed thereto, which glass receiving profile has at least one groove for receiving a light transparent panel (19) and at least one connecting piece (15) for connecting the glass receiving profile to the steel bar profile (13).

These bars constructed from steel and plastic are strong, are not very costly and can be designed with small dimensions so that they keep out little light.

FIG.19

EP 0 513 934 A1

The invention relates to a glasshouse comprising bars for receiving light transparent panels, such as glass plates.

The invention has for its object to simplify the construction of the glasshouse and to increase the efficiency thereof.

For this purpose the glasshouse has the feature according to claim 1.

Because according to the invention elements are used which are per se easy to manufacture from simple material, namely steel, these elements are not expensive. In small dimensions they are very strong so that they keep out little light, which substantially improves crop production in the glasshouse.

The invention will be elucidated in the description following hereinafter on the basis of embodiments with reference to drawings, in which:

Figure 1 shows a broken away perspective view of a fraction of a glasshouse according to the invention;

Figures 2 and 3 show a section of details II and III respectively from figure 1;

Figures 4 and 5 show perspective views of detail V in figure respectively in disassembled and assembled state;

Figure 6 is an exploded perspective view of detail II in figure 1;

Figure 7 is an exploded perspective view of detail VII in figure 6;

Figure 8 shows a variant of figure 3;

Figure 9 is an exploded perspective view of detail IX in figure 8;

Figure 10 shows a broken away perspective view of a variant of detail II in figure 1;

Figure 11 is a broken away perspective view of a fraction of a further developed glasshouse according to the invention;

Figure 12 shows a section of detail XII in figure 11;

Figures 13 and 15 show perspective exploded views of details XIII and XV respectively in figure 11;

Figure 14 shows on a larger scale detail XIV in figure 13;

Figure 16 is a partly broken away perspective view of detail XVI in figure 11;

Figures 17-21 each show a section through a different embodiment in each case of a bar for a glasshouse according to the invention; and

Figure 22 shows a cross section corresponding with figure 21 during manufacture of this bar.

The glasshouse 1 comprises a frame of pillars 2, parallel trusses 3 supported by the pillars 2 and gutters 4 directed transversely of the trusses 3, and further comprises glass side walls (not shown). The gutters 4 support the roof 5 which comprises parallel bars 6 arranged at regular mutual distances which are fixed with their bottom ends 8 to gutter edges 7 and which are fixed with their top ends 9 to ridge profiles 10. The gutters 4 are fixed to the pillars 2 and/or the trusses 3 by means of gutter supports 11, wherein condensation drain gutters 12 are also present under the gutters 4.

Each gutter 4 is made from bent steel plate, wherein the gutter edges 7 are bent downward and inward through 180°. These gutters 4 combine a considerable resistance moment against bending with a compact shape which keeps out little light.

Each bar 6 consists of a simple tubular, rectangular, steel bar profile 13 and a glass strip profile 14 whereof downward directed flanges 15 cover the sides of the bar profile 13 and grip round the underside of the bar profile 13. The top side of the bar profile 13 is covered by flanges 16 of the glass strip profile 14, which flanges 16 are connected to the upper flanges 17 which have slantingly oriented glass press-on edges 18. Glass plates 19 are received between flanges 16 and 17, this in elastic manner without rattling and therefore with little danger of glass breakage. Because of the covering of the bar profile 13 by the glass strip profile 14 the bar profile 13 is isolated and depositing of condensation on the bar 6 is greatly reduced, if not avoided. The glass strip profile 14 is preferably made of lightly coloured, light reflecting plastic, which increases the crop production of the glasshouse 1. The compact shape of the tubular bar profile 13 with great resistance moment also contributes to the increase in crop production because the bar 6 keeps out little light. The roof 5 is herein still of robust design. With the bar 6 a considerable span between ridge profile 10 and gutter 4 can be realized without girders located therebetween. The tubular bar profiles can be of rectangular, square, trapezoidal, triangular or other shape.

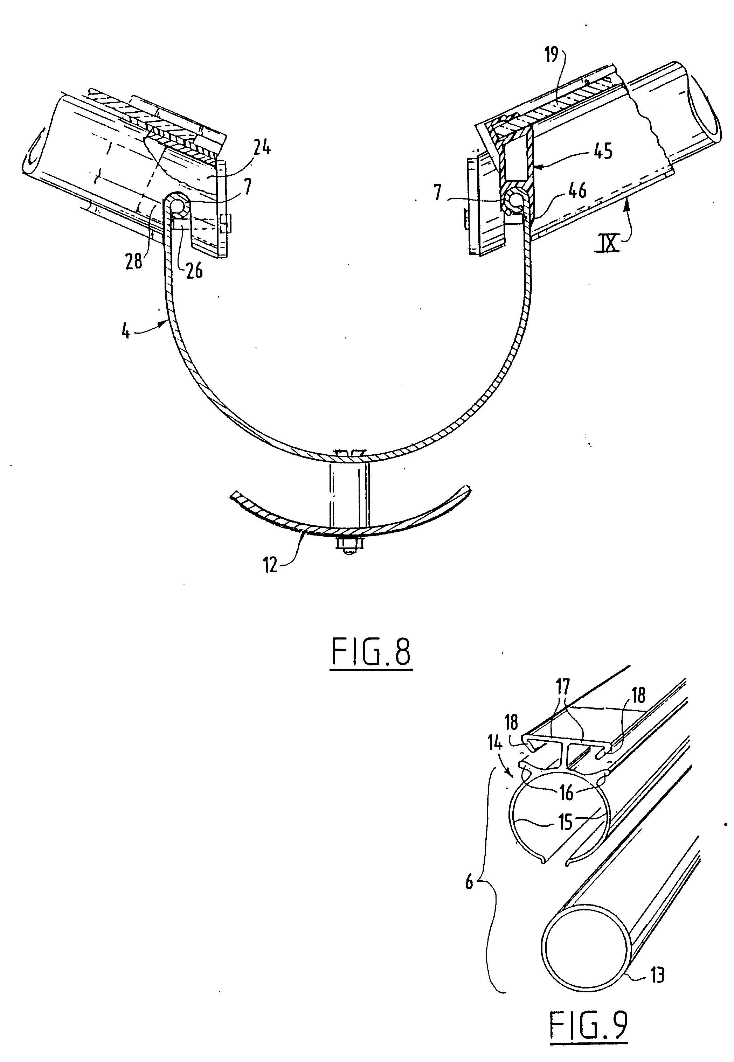

According to figure 9 the bar profile 13 consists of a round steel tube and the glass strip profile 14 is adapted thereto and has round gripping flanges 15. Also to be found once again are the flanges 16 and 17.

The gutter edges 7 have from place to place, where the bars 6 have to be mounted, openings 20 punched out in the downward edges 21 prior to bending, while the opposite gutter piece 54 remains closed. The bar 6 has on its bottom end 8 a recessed transverse channel 23 to receive a gutter edge 7. Prior to assembly a plastic fixing member 24 is pushed into the bar profile 13 in which member a nut 25 or a screw hole is present. After the bar 6 has been placed onto the gutter edge 7 a screw 26 is tightened such that the end thereof protrudes through the opening 20 for locking the bar 6 on the gutter edge 7. The fixing member 24 has stops 27 to the sides with which it strikes against the head end surface 22 of the bar 6 in order to adjust the insertion depth thereof. In the assembled situation a locking piece 28 of the fixing member 24 grips behind the gutter edge 7.

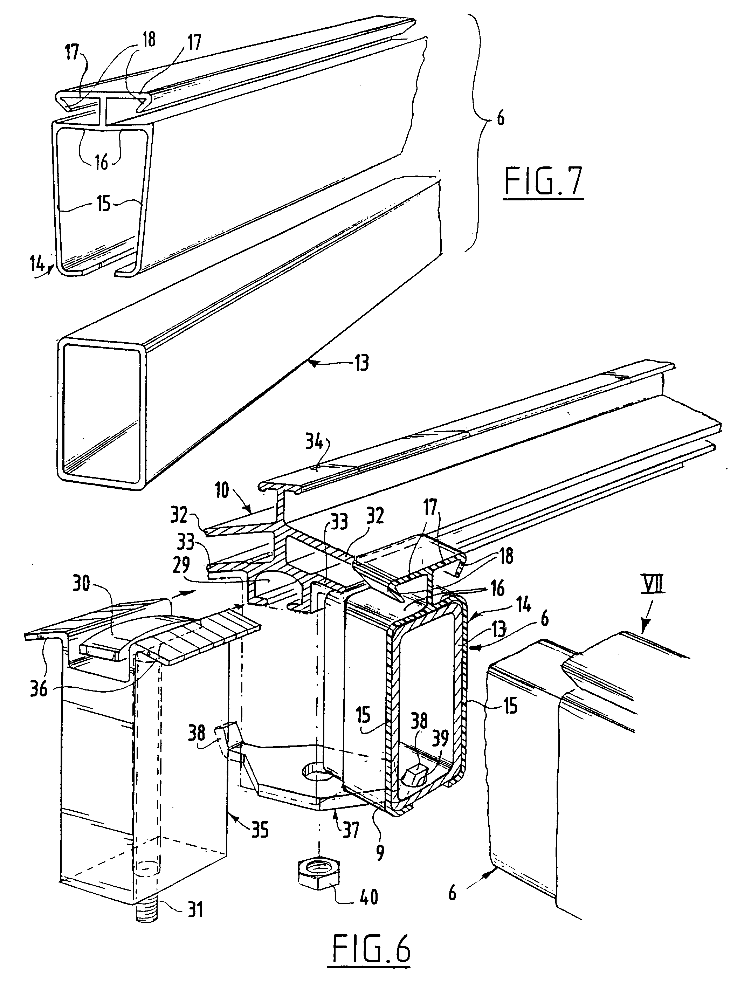

The top ends 9 of the bars 6 are fixed as according to figure 6 to a ridge profile 10, which has a bolt head chamber 29 for receiving the head 30 of a bolt 31. The ridge profile 10 has two top flanges 32 and two bottom flanges 33 which incline slanting downward and between which glass plates 19 are received as well as a window pivot flange 34. The bolt 31 protrudes through a support member 35 of plastic which is provided on its top end with flanges 36 which separate the ridge profile 10 of aluminium from the steel bar profile 13, thus avoiding considerable rust forming. The glass strip profile 14 of the bar 6 has a recess at the location of the flanges 32, 33 or is wholly absent at that position. A clamping piece 37 grips with fingers 38 into holes 39 of bar profiles 13 and, by means of a nut 40 and bolt 31, clamps the top ends 9 firmly and fixedly on the ridge profile 10 which has a small height.

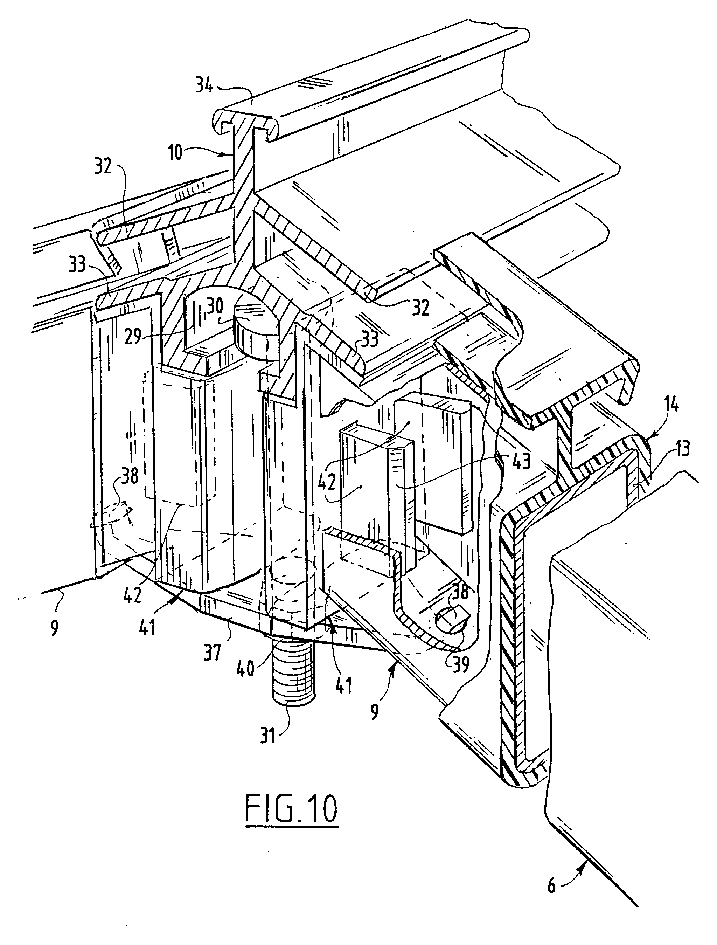

In the variant of figure 10 two support members 41 of plastic are present per fixing position and each is provided with gripping elements 42 to the sides which engage with elastic clamping force in the bar profiles 13 and are easy to insert therein due to sloping positioning surfaces 43. Preferably the bars 6 are provided beforehand with support members 41 and the glass strip profiles 14. In the fixing of figure 10 the bars 6 can be pushed easily from the side under the ridge profile 10 and above the clamping piece 37, whereafter the clamping piece 37 firmly clamps the top ends 9 of the bars 6 through tightening of the nut 40.

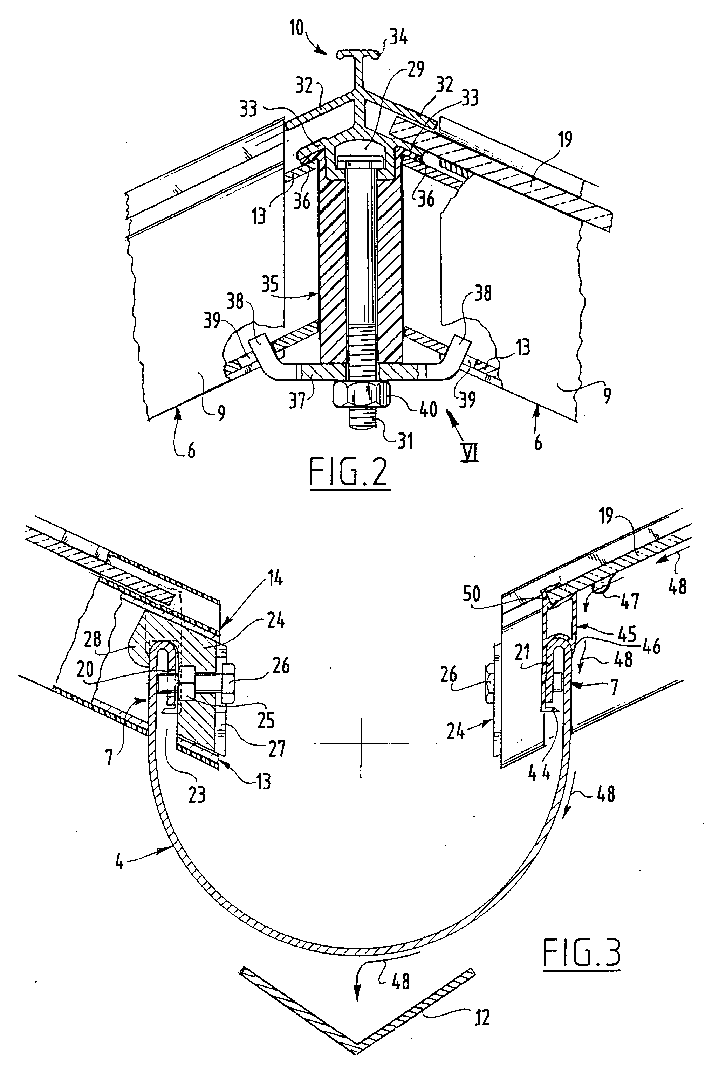

According to figures 3 and 5 a hollow gutter edge profile 45 of plastic snaps with a hooking edge 44 under the downward edge 21 of the bent gutter edge 9, while a lip 46 on the outside of the gutter 4 joins smoothly onto the gutter edge 7 such that condensation 47 is guided easily as according to arrows 48 from the glass plate 19 along the gutter edge profile 45, and in particular the lip 46 thereof, along the outside of the gutter 4 into the condensation gutter 12. This gutter edge profile 45 further has a top piece 50 for elastically receiving a glass plate 19 therein.

According to figure 8 the steel gutter 4 has a bent gutter edge 7 in the form of an inward bead. The locking piece 28 of the fixing member 24 and the lip 46 and the hooking flange 44 of the gutter edge profile 45 are adapted thereto. The bolt 26 engages in this case under the gutter edge 7 in the form of a bead.

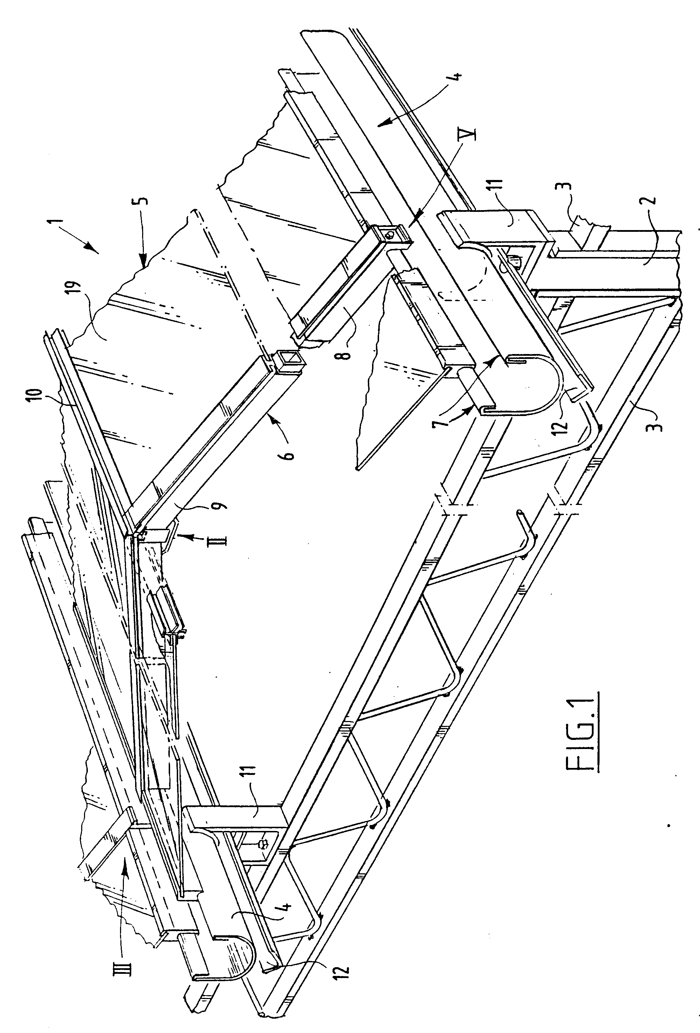

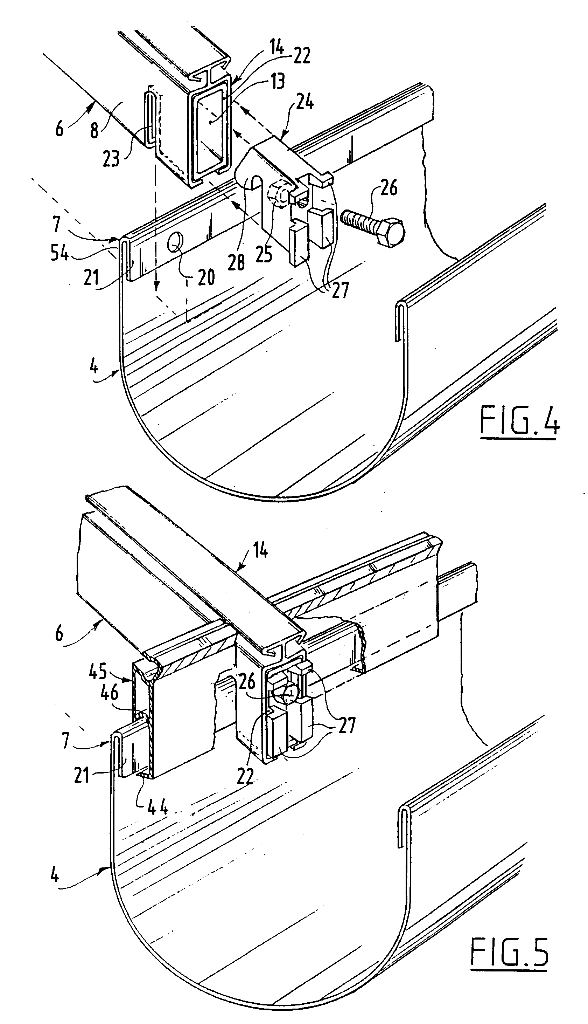

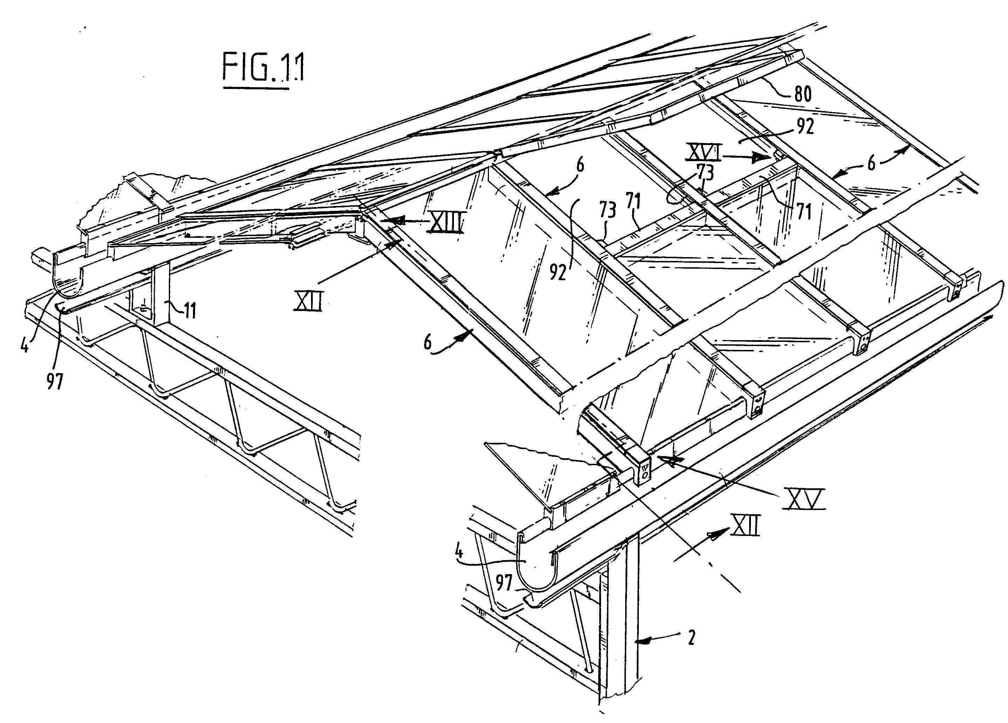

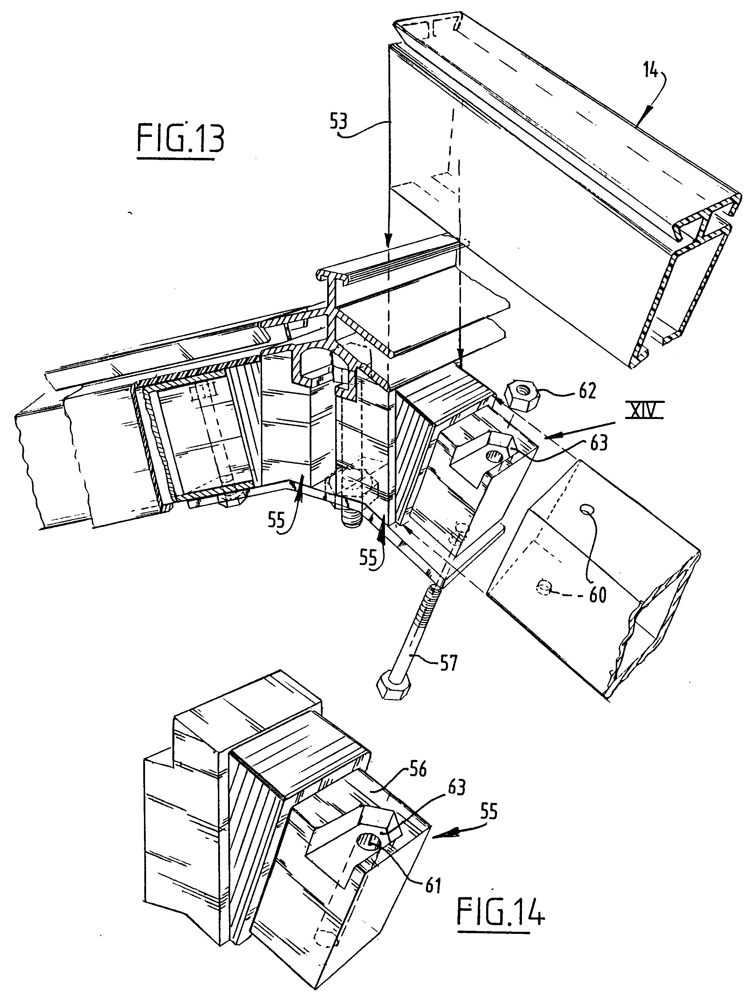

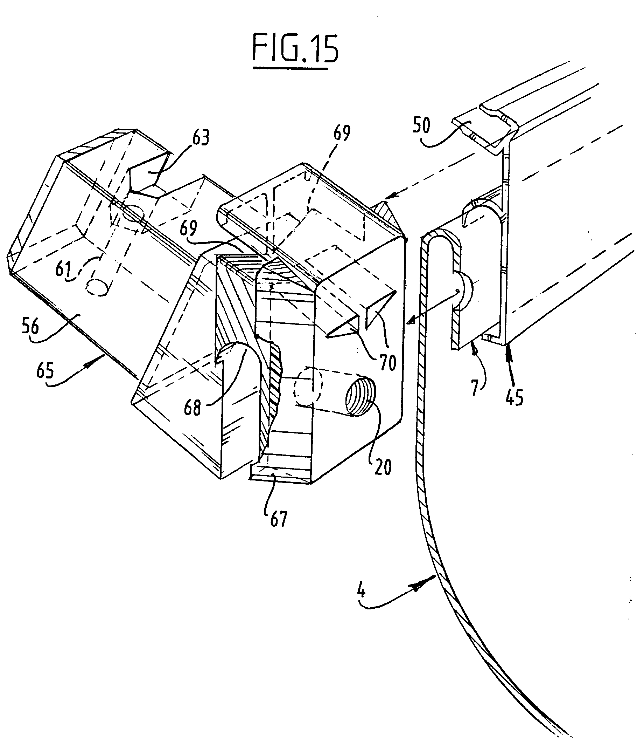

The glasshouse 1 of figures 11-17 corresponds with the glasshouse 1 of figures 1-7, with the understanding that it differs in respect of the details as described hereinbelow.

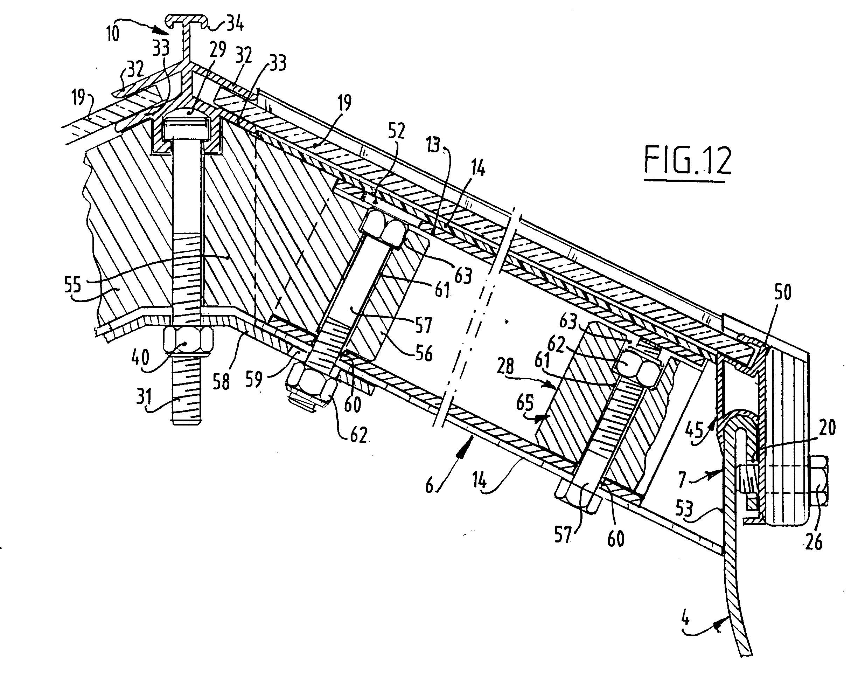

Bars 6 consist according to figure 12 of pieces of steel tube profile 13 cut off square and glass strip profiles 14 cut off obliquely according to parallel planes 53 and each fixed to a ridge profile 10 by means of support members 55 which each engage with a fastening piece 56 into a steel bar profile 13 and which are fixed thereto by means of a bolt 57 which is pushed first through a hole 52 of bar profile 14, then through a bore 61 of the fastening piece 56, then through a hole 60 of this bar profile 13 and subsequently through a hole 59 of a clamping plate 58. The bolt head 51 is received in an adapted recess 63 of fastening piece 56. The glass strip profile 14 is first arranged round the tube profile 13 after the support member 55 and bolt 57 have been mounted. Both fastening pieces 56 are fixedly clamped to the ridge profile 10 as according to figure 12 by means of clamping plate 58 and the bolt 31 with nut 40 pushed therethrough, wherein nuts 62 are also screwed onto the bolts 57.

The other end of bar 6 is fixed to the gutter edge 7 by means of a fastening member 65 which is first fixed to the bar profile 13 by means of a bolt 57 which protrudes through a hole 60 of the bar profile 13, a bore 61 arranged in a fastening piece and a nut 62 arranged in a recess 63 of the fastening piece 56. By tightening both bolts 57 both fastening pieces 56 and 65 are fixed firmly to the bar 6, preferably prior to transport to the construction site. The fastening member 65 is fixed to the gutter edge 7 by placing the gutter fastening piece 67 thereof with its groove 68 onto gutter edge 7 and screwing the bolt 26 as locking member into the screw hole 20 of the gutter edge 7. The fastening member 65 has grooves 69 on either side for receiving glass plates 19 and connects onto the top piece of the glass strip profile 14. The fastening member 65 further has recesses 70 for passage of condensation. It should be noted that the steel bar profile 13 is wholly isolated by means of the connecting members 55 and 65 from other metal components such as the aluminium ridge profile 10 and the steel gutter profile 4. The bar profile 13 is further well isolated from condensation.

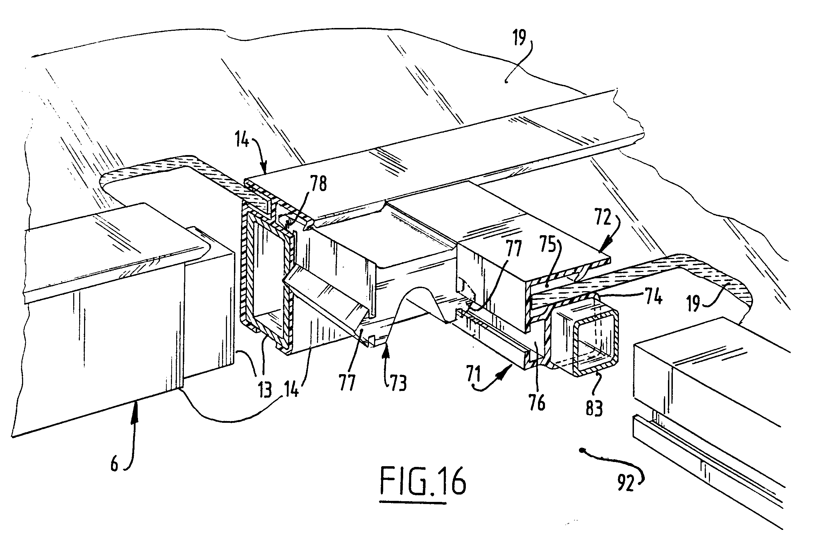

According to figure 16 a window edge bar 71 which bounds a window opening 92 on its underside is arranged between two bars 6 and is fixed thereto by means of coupling elements 73, as can be seen in figure 11 below the window 80. This bar 71 consists of a glass strip profile 72 which encloses a tubular steel bar profile 83 with a tubular piece 74 and which has only one glass groove 75 for receiving a glass plate 19. The glass strip profile 72 further has a coupling groove 76 for receiving a coupling piece 77 of a coupling element 73, a supporting edge 78 of which engages in a glass groove of the glass strip profile 14 of a bar 6.

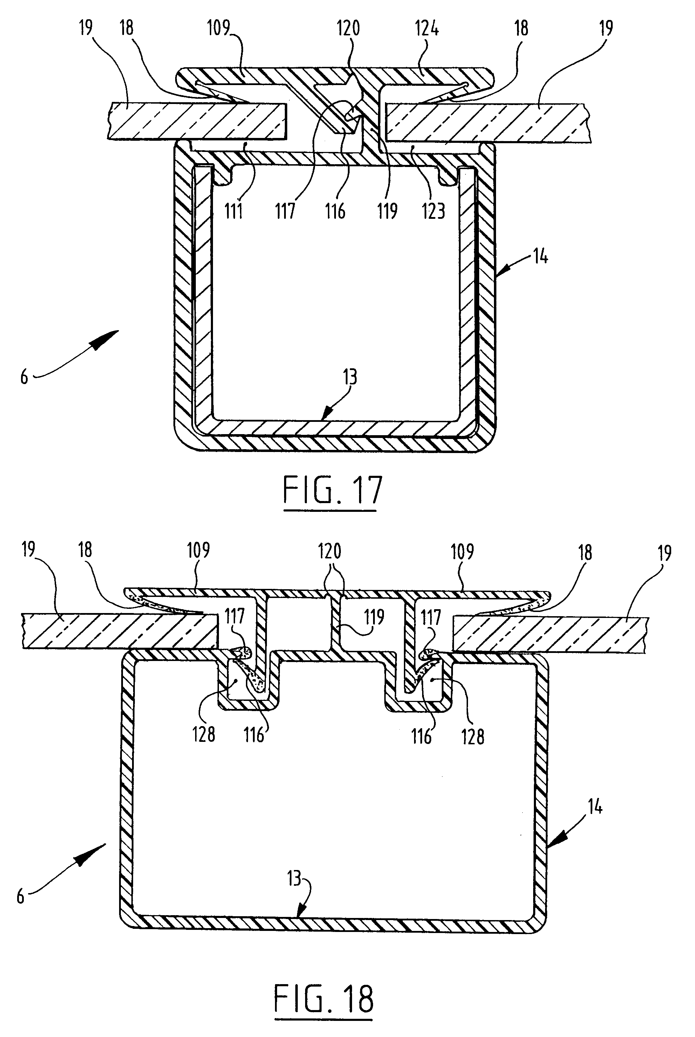

The bar 6 of figure 17 comprises a glass receiving profile 14 of plastic having a tubular connecting piece pushed over a steel U-shaped bar profile 13.

The right-hand transverse groove 123 is bounded by a fixed flange 124, while only the left-hand groove 111 is bounded by a movable flange 109 which is connected with a plastic hinge 120 consisting of a local constriction to the standing support 119 which is provided with a hooking edge 117. This co-acts with the locking hook 116 fixed to the movable flange 109. The flanges 111 and 124 are provided with inward oriented limp glass press-on edges 18.

The bar 6 of figure 18 comprises a glass receiving profile 14. This engages as a tubular profile of plastic round a steel C-profile 7. This glass receiving profile 14 has two movable flanges 109 which are each connected by means of a plastic hinge 120 consisting of a local material weakening to a support 119. Locking hooks 116 grip into cavities 128 and behind hooking edges 117.

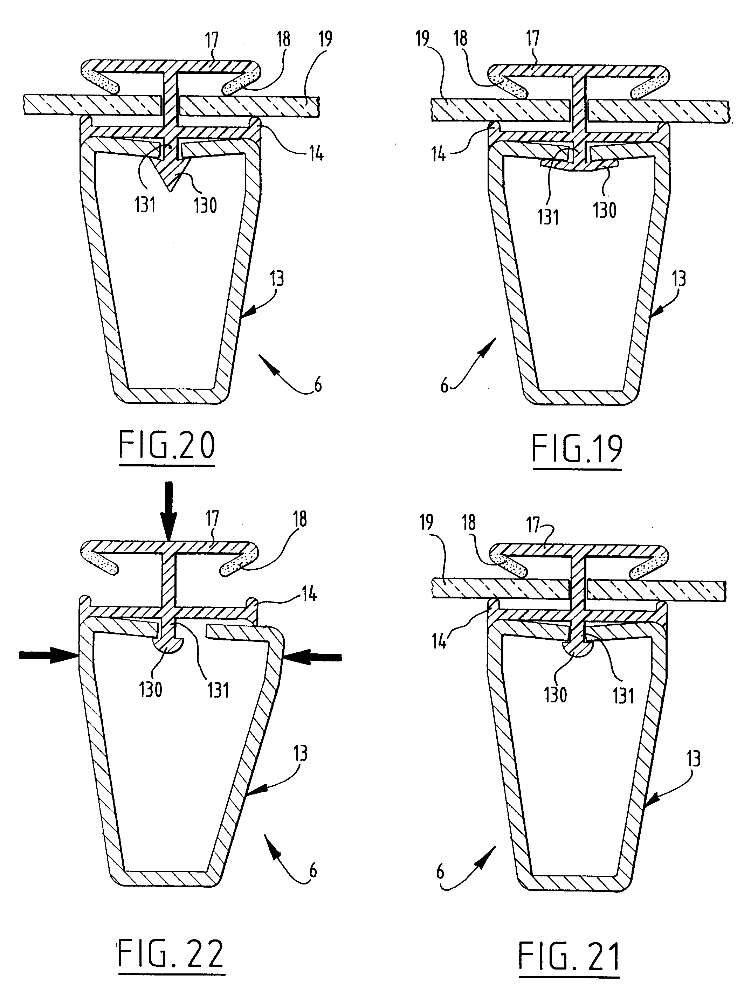

The bars 6 of figures 19-21 each consist of a C-shaped steel bar profile 13 and a glass receiving profile 13, whereof a fastening piece has an anchoring piece 130 received in the bar profile 13 and a neck 131. The neck 131 extends between the edges of the bar profile 13. As shown in figure 22, this neck 131 can be fixedly clamped by clamping together the bar profile 13.

The bar profiles of figures 19-21 are all of sendzimir steel that is coated white.

**Claims**

1. Glasshouse (1) comprising bars (6) for receiving light transparent panels such as glass plates (19), **characterized in that** at least one bar (6) comprises a bar profile (13) of steel and a glass receiving profile of plastic fixed thereto, which glass receiving profile has at least one groove for receiving a light transparent panel and at least one connecting piece for connecting the glass receiving profile to the steel bar profile.

2. Glasshouse (1) as claimed in claim 1, **characterized in that** steel bar profiles (13) are fixed to ridge profiles (10) of aluminium with interposing of support members (35, 41) of plastic which preferably have on their top ends at least one top edge (36) which is received between a downward slanting flange (33) of the ridge profile (10) and a top end (9) of a bar profile (13) and wherein sideways gripping elements 42 of support members (41) engage with elastic clamping force onto the top ends (9) of bars (6).

3. Glasshouse (1) as claimed in any of the foregoing claims, **characterized in that** the bar profile (13) of steel is tubular.

4. Glasshouse (1) as claimed in any of the foregoing claims, **characterized in that** the steel bar profile (13) has on its bottom end (9) a transverse groove (23) for receiving therein a gutter edge (7), while a fastening member (24) is pushed into the bottom end (9) which is provided with a locking piece gripping behind the gutter edge (7).

5. Glasshouse (1) as claimed in any of the foregoing claims, **characterized in that** the glass receiving profile (72) has only one glass groove (75) for receiving a light transparent panel (19) and further engages round a steel profile (83), and that in addition to a glass groove (75) for receiving a light transparent panel (19) the glass receiving profile (72) preferably has a coupling groove (76) for receiving a coupling piece of a coupling element (73) in order to form a window edge bar (71) which can be fixed between two other bars, which coupling element (73) also has a support edge gripping in a glass groove.

6. Glasshouse as claimed in any of the foregoing claims, **characterized in that** at least two bars (6) are fixed in pairs to a ridge profile (10) by means of support members (55) which each reach with a fastening piece (56) into a metal bar profile (13) and are fastened thereto by means of a fixing means, for instance a bolt (57), and that the pair of bars (6) are fixedly clamped to the ridge profile (10) by means of a common clamping plate (58) and a common bolt (31).

7. Glasshouse as claimed in any of the foregoing claims, **characterized in that** the bottom end of at least one bar (6) supported by a gutter (4) is fixed to a gutter edge (7) by means of a fastening member (65), of which a bar fixing piece (56) grips into the bar (6) and is fixed therein by means of fixing means (57) and that a gutter fixing piece (67) has a groove (68) for receiving a gutter edge (7) in addition to a recess (20) for receiving a locking member (26).

8. Glasshouse as claimed in any of the foregoing claims, **characterized in that** the bar profile (13) is C-shaped and has inward oriented top edges and that the connecting piece of the glass receiving profile (14) has an anchor piece received in the C-shaped bar profile (13) and a neck connecting onto the anchor piece (130) and extending between the inward oriented edges of the bar profile (13).

FIG.1

FIG.2

FIG.3

FIG.4

FIG.5

FIG.7

FIG.6

FIG.8

FIG.9

FIG.10

FIG.11

FIG.12

FIG.13

FIG.14

# FIG.15

FIG.16

EP 0 513 934 A1

FIG. 17

FIG. 18

FIG.20

FIG.19

FIG. 22

FIG. 21

Application Number

EP 92 20 1650

**European Patent Office**

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-1 062 948 (DREYFUS) <br> * page 1, right column, paragraph 7 - page 2, right column, paragraph 1; figure 1 * | 1,3,8 | A01G9/14 <br> E04D3/08 |
| Y | | 4-6 | |
| | --- | | |
| Y | NL-A-8 901 195 (P.L.J. BOM BEHEER B.V.) <br> * page 1, line 24 - page 2, line 31; figure 2 * | 4 | |
| A | | 7 | |
| | --- | | |
| Y | EP-A-0 378 868 (P.L.J. BOM BEHEER B.V.) <br> * column 2, line 2 - column 4, line 35; figures * | 5 | |
| | --- | | |
| Y | EP-A-0 369 508 (P.L.J. BOM BEHEER B.V.) <br> * column 2, line 15 - column 4, line 21; figures * | 6 | |
| A | | 2,4,7 | |
| | --- | | |
| A | US-A-3 150 463 (NEARING ET AL.) <br> * column 1, line 70 - column 2, line 9; figures 3-4 * | 6 | TECHNICAL FIELDS SEARCHED (Int. Cl.5 ) |
| | --- | | A01G |
| A | FR-A-2 289 111 (TOSELLO) <br> * figure 2 * | 7 | E04D |
| | ----- | | |

The present search report has been drawn up for all claims

| Place of search | Date of completion of the search | Examiner |
|---|---|---|
| THE HAGUE | 09 SEPTEMBER 1992 | FONTS CAVESTANY A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P0401)